# EUROPÄISCHE PATENTSCHRIFT

(11) **EP 0 647 667 B1**
(45) Veröffentlichungstag und Bekanntmachung des Hinweises auf die Patenterteilung: **06.05.1998**
(21) Anmeldenummer: 94115552.5
(22) Anmeldetag: 04.10.1994
(51) Int. Cl.: C08G 18/10, C09D 175/04, C09J 175/04

(54) **Emulgatorfrei in Wasser dispergierbare Polyurethane**
Emulsifier-free water-dispersible polyurethanes
Polyuréthanes dispersibles dans l'eau sans émulsifiant

(30) Priorität: 11.10.1993 DE 4334563
(43) Veröffentlichungstag der Anmeldung: 12.04.1995
(73) Patentinhaber: HOECHST AKTIENGESELLSCHAFT, 65926 Frankfurt am Main (DE)
(72) Erfinder: Schafheutle, Markus A., Dr., D-65239 Hochheim (DE); Zöller, Joachim, Dr., D-55128 Mainz (DE)
(74) Vertreter: Zounek, Nikolai, Dipl.-Ing.

(56) Entgegenhaltungen:
- DE-A- 2 035 732
- DE-A- 3 216 567
- DATABASE WPIL, Nr. 85-307 917, DERWENT PUBLICATIONS LTD., London; & JP-A-60 215 557 (DAIICHI KOGYO SEIYAKU CO. LTD.)

## Beschreibung

Emulgatorfreie wäßrige Polyurethandispersionen lassen sich zur Herstellung von Beschichtungen auf Geweben, Holz, Papier oder Metalloberflächen verwenden.

Besonders günstige mechanische Eigenschaften der Beschichtungen (Härte, Abrieb-, Kratz- und Schlagfestigkeit) lassen sich mit hochmolekularen Polyurethanen erreichen. Solche hochmolekularen Polyurethane lassen sich hier jedoch in der Schmelze wegen der hohen Viskositäten schlecht handhaben, man bevorzugt daher das Arbeiten in Lösemitteln. Andererseits ist man aus Umweltgründen bestrebt, Lösemittel möglichst nicht oder nur wenig zu verwenden. Die Dispergierbarkeit in Wasser erfordert die Gegenwart einer ausreichenden Zahl an hydrophilen Gruppen im Polymeren.

Wäßrige Polyurethandispersionen sind in der DE-PS 14 95 745 beschrieben. Die Dispergierbarkeit in Wasser wird hier erreicht, indem an die Isocyanat-terminierten Präpolymere solche Verbindungen addiert werden, die neben dem mit der Isocyanatgruppe reagierenden aktiven Wasserstoffatom noch eine salzartige oder zur Salzbildung fähige Gruppe tragen, wie beispielsweise eine quaternisierbare Aminogruppe. Eine andere beschriebene Ausführungsform ist die Umsetzung des Präpolymeren mit einer Verbindung, die neben der salzartigen oder zur Salzbildung fähigen Gruppe noch eine Isocyanatgruppe aufweist.

In der DE-PS 14 95 847 ist ein Verfahren zur Herstellung von anionischen Polyurethanen beschrieben, bei dem in Gegenwart von Aceton als Lösemittel im wesentlichen lineare Moleküle mit reaktiven Wasserstoffatomen und einer Molmasse von 300 bis 10000 g/mol mit Polyisocyanaten umgesetzt werden, wobei eine Verbindung umgesetzt wird, die eine Carboxyl- oder Sulfonsäuregruppe und mindestens ein gegenüber Isocyanat reaktives Wasserstoffatom trägt.

Die DE-PS 19 54 090 beansprucht die Herstellung von 2-(β-Aminopropionamido-)alkansulfonsäuresalzen und deren Verwendung als anionische Aufbaukomponente bei der Herstellung von Polyurethandispersionen.

In der DE-OS 20 35 732 wird ein Verfahren zur Herstellung von N-(ω-Aminoalkan)-ω-aminoalkansulfonsäuresalzen und deren Verwendung als anionische Aufbaukomponente bei der Herstellung von emulgatorfreien Polyurethandispersionen beschrieben.

In allen genannten Dokumenten wird von einem Urethanpräpolymeren ausgegangen, das bis zu dieser Stufe noch keine ionischen oder ionogenen Gruppen trägt. Die Einführung von ionogenen Strukturen ermöglicht die Dispergierbarkeit in Wasser, in der beschriebenen Weise werden die reaktiven Isocyanatgruppen des Präpolymeren jedoch stets vollständig abreagiert. Mit der Einführung dieser Gruppen wird die Polyaddition also beendet. Eine nachträgliche Erhöhung der Molmasse zur Verbesserung der mechanischen Eigenschaften ist dann nicht mehr einfach möglich. Die Herstellung aus Urethanpräpolymeren in einer lösemittelfreien Schmelze ist zwar im Text dieser Dokumente erwähnt, in den Beispielen werden die Reaktionen jedoch stets in einem Lösemittel durchgeführt, um die Viskosität nicht über Gebühr ansteigen zu lassen.

Es bestand daher die Aufgabe, emulgatorfrei in Wasser dispergierbare Polyurethane zur Verfügung zu stellen, die kein Lösemittel enthalten und trotz hoher Molmasse problemlos zu verarbeiten sind.

Gegenstand der Erfindung sind emulgatorfrei in Wasser dispergierbare Polyurethane, erhalten durch partielle Umsetzung eines Isocyanat-terminierten Urethan-Präpolymeren mit einem Salz einer Säure, die durch ein reaktives Wasserstoffatom monofunktionell gegenüber Isocyanat ist, und nachfolgende Umsetzung der verbliebenen Isocyanatgruppen mit einem Kettenverlängerungsmittel, dadurch gekennzeichnet, daß die Menge an Salz so gewählt wird, daß 20 bis 80 % der Isocyanat-Endgruppen des Präpolymeren umgesetzt werden.

Dabei ist die Menge an Salz vorzugsweise so zu wählen, daß 30 bis 60 % der Isocyanat-Endgruppen umgesetzt wird. Gemäß der Erfindung wird es möglich, in einem nachfolgenden Schritt durch Zugabe eines Polyamins und einer geeigneten Menge an Wasser eine Kettenverlängerung durchzuführen. Die Wassermenge ist dabei so zu bemessen, daß der Viskositätsanstieg durch die Kettenverlängerung durch diese Verdünnung kompensiert wird.
Es werden lineare oder verzweigte Polyurethane erhalten, die an den Kettenenden Säuregruppen tragen und in der Kette bzw. an den Verzweigungstellen Harnstoffgruppierungen aufweisen. Dieser Molekülaufbau führt zu feinteiligen, lager- und hydrolysestabilen Polyurethandispersionen, deren Filme eine hohe Resistenz gegen Wasseranquellung zeigen.
Die Isocyanat-terminierten Urethanpräpolymeren werden hergestellt durch Umsetzung von einem oder mehreren hochmolekularen Polyolen A, gegebenenfalls unter Zusatz von niedermolekularen Polyolen, Polyaminen oder Polymercaptanen A', mit einem oder mehreren Polyisocyanaten B in der Schmelze bei 60 bis 130 °C.
Anschließend wird zu dieser Schmelze ein Salz C einer Säure hinzugefügt, die durch ein gegenüber Isocyanat reaktives Wasserstoffatom monofunktionell gegenüber Isocyanat ist. Geeignete Säuren sind beispielsweise Carbon-, Sulfon- oder Phosphonsäuren, die im Molekül eine Hydroxy- oder Aminosäuregruppe enthalten. Das Salz kann in Substanz oder in Form einer wäßrigen Lösung bei einer Temperatur unter 100 °C zugesetzt werden. Es können auch Mischungen verschiedener solcher Salze verwendet werden.
Nach dieser Umsetzung wird entweder durch Wasserzugabe eine Dispersion hergestellt und anschließend durch Zusatz eines Polyamins D eine Kettenverlängerung erreicht (Verfahren I), oder es wird zunächst durch Zugabe des Polyamins D in einer geringen Menge Wasser die Kettenverlängerung durchgeführt und danach in einer größeren Menge Wasser dispergiert (Verfahren II). Es ist auch erfindungsgemäß möglich, das zur Kettenverlängerung benötigte Polyamin D in der gesamten Menge Dispergierwasser zu lösen und also zugleich mit dem Wasser zu dem isocyanathaltigen Urethanpräpolymeren zu geben (Verfahren III). Ebenfalls kann eine Kettenverlängerung auch durch eine partielle Hydrolyse der Isocyanatgruppen und anschließende Umsetzung der entstandenen Amine mit den verbliebenen Isocyanatgruppen erreicht werden (Verfahren IV). In allen beschriebenen Verfahren kann die Temperatur des Dispergierwassers zwischen 0 und 100 °C liegen, bevorzugt ist ein Bereich von 20 bis 80 °C.

Die für die Erfindung geeigneten hochmolekularen Polyole A sind die üblicherweise bei der Herstellung von Polyurethanen verwendeten. Sie sind beispielsweise ausgewählt aus den Polyetherpolyolen, den Polyesterpolyolen, den Polylactonpolyolen und den Polycarbonatpolyolen.

Als Polyetherpolyole kommen Verbindungen der Formel

H - [ - O - (CHR)ₙ-]ₘ OH

infrage, in der
- R: Wasserstoff oder ein niedriger Alkylrest, gegebenenfalls mit verschiedenen Substituenten, ist,
- n: eine Zahl von 2 bis 6 und
- m: eine Zahl von 10 bis 120 ist.

Beispiele sind Poly(oxytetramethylen)glykole, Poly(oxyethylen)glykole und Poly(oxypropylen)glykole. Die bevorzugten Polyetherpolyole sind Poly(oxypropylen)glykole mit einer Molmasse im Bereich von 400 bis 5000 g/mol.

Die Polyesterpolyole werden hergestellt durch Veresterung von organischen Polycarbonsäuren oder ihren Anhydriden mit organischen Polyolen. Die Polycarbonsäuren und die Polyole können aliphatische oder aromatische Polycarbonsäuren und Polyole sein.

Die zur Herstellung verwendeten Polyole schließen Alkylenglykole wie Ethylenglykol, Butylenglykol, Neopentylglykol, Hexandiol-1,6 und andere Glykole wie Dimethylolcyclohexan sowie Trishydroxyalkylalkane, wie z.B. Trimethylolpropan und Tetrakishydroxyalkylalkane, wie z.B. Pentaerythrit ein.

Die Säurekomponente der Polyesterpolyole besteht in erster Linie aus niedermolekularen Polycarbonsäuren oder ihren Anhydriden mit 2 bis 18 Kohlenstoffatomen im Molekül. Geeignete Säuren sind beispielsweise Phthalsäure, Isophthalsäure, Terephthalsäure, Tetrahydrophthalsäure, Hexahydrophthalsäure, Bernsteinsäure, Adipinsäure, Azelainsäure, Sebazinsäure, Maleinsäure, Glutarsäure, Hexachlorheptandicarbonsäure, Alkyl- und Alkenylbernsteinsäuren, z.B. n-Octenylbernsteinsäure, n- und iso-Dodecenylbernsteinsäure, Tetrachlorphthalsäure, Trimellitsäure und Pyromellitsäure. Anstelle dieser Säuren können auch ihre Anhydride verwendet werden, soweit diese existieren. Als Polycarbonsäuren lassen sich auch Dimer- und Trimerfettsäuren einsetzen. Besonders bevorzugt werden Terephthalsäure, Adipinsäure und Maleinsäure.

Unter den Begriffen Polyetherpolyole und Polyesterpolyole sind auch solche Produkte dieser Art zu verstehen, die Monomere mit Carbonsäure-, Phosphonsäure- oder Sulfonsäure-Gruppen enthalten.

Ferner lassen sich bei der Erfindung auch Polyesterpolyole benutzen, die sich von Lactonen ableiten. Diese Produkte erhält man beispielsweise durch die Umsetzung eines ε-Caprolactons mit einem Polyol. Solche Produkte sind in der US-PS 3 169 945 beschrieben.

Die Polylactonpolyole, die man durch diese Umsetzung erhält, zeichnen sich aus durch die Gegenwart einer endständigen Hydroxylgruppe und durch wiederkehrende Polyesteranteile, die sich von dem Lacton ableiten. Diese wiederkehrenden Molekülanteile können der Formel 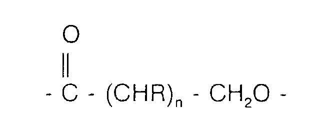 entsprechen, in der n bevorzugt 4 bis 6 ist und der Substituent R Wasserstoff, ein Alkylrest, ein Cycloalkylrest oder ein Alkoxyrest ist, wobei kein Substituent mehr als 12 Kohlenstoffatome enthält.

Das als Ausgangsmaterial verwendete Lacton kann ein beliebiges Lacton oder eine beliebige Kombination von Lactonen sein, wobei dieses Lacton mindestens 6 Kohlenstoffatome in dem Ring enthalten sollte, zum Beispiel 6 bis 8 Kohlenstoffatome und wobei mindestens 2 Wasserstoffsubstituenten an dem Kohlenstoffatom vorhanden sein sollten, das an die Sauerstoffgruppe des Rings gebunden ist. Das als Ausgangsmaterial verwendete Lacton kann durch die folgende allgemeinen Formel dargestellt werden: 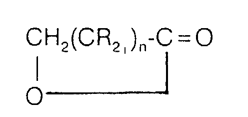 in der n und R die bereits angegebene Bedeutung haben.

Die bei der Erfindung bevorzugten Lactone sind die ε-Caprolactone, bei denen n den Wert 4 hat. Das am meisten bevorzugte Lacton ist das unsubstituierte ε-Caprolacton, bei dem n den Wert 4 hat und alle R-Substituenten Wasserstoff sind. Dieses Lacton wird besonders bevorzugt, da es in großen Mengen zur Verfügung steht und Überzüge mit ausgezeichneten Eigenschaften ergibt.

Außerdem können verschiedene andere Lactone einzeln oder in Kombination benutzt werden.

Beispiele von für die Umsetzung mit dem Lacton geeigneten aliphatischen Polyolen sind Ethylenglykol, 1,3-Propandiol, 1,4-Butandiol, Hexandiol-1,6, Dimethylolcyclohexan, Trimethylolpropan und Pentaerythrit.

Als Ausgangsverbindungen kommen weiterhin Polycarbonatpolyole bzw. Polycarbonat-diole in Frage, die der allgemeinen Formel 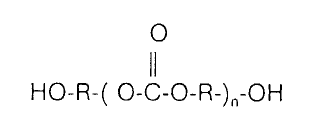 entsprechen, worin R einen Alkylenrest bedeutet. Diese OH-funktionellen Polycarbonate lassen sich durch Umsetzung von Polyolen wie Propandiol-1,3, Butandiol-1,4, Hexandiol-1,6, Diethylenglykol, Triethylenglykol, 1,4-Bishydroxymethylcyclohexan, 2,2-Bis(4-hydroxycyclohexyl)propan, Neopentylglykol, Trimethylolpropan, Pentaerythrit, mit Dicarbonaten, wie Dimethyl-, Diethyl- oder Diphenylcarbonat, oder Phosgen herstellen. Gemische solcher Polyole können ebenfalls eingesetzt werden.

Die zuvor beschriebenen Polyetherpolyole, Polyesterpolyole, Polylactonpolyole und Polycarbonatpolyole können allein oder gemeinsam eingesetzt werden. Darüberhinaus können diese Polyole A auch zusammen mit unterschiedlichen Mengen an niedermolekularen, isocyanatreaktiven Polyolen, Polyaminen oder Polymercaptanen A' eingesetzt werden. Als Verbindungen dieser Art kommen beispielsweise Ethylenglykol, Propylenglykol-1,2 oder -1,3, Butandiol-1,4 oder -1,3, Hexandiol-1,6, die niederen Oligomere der zuvor genannten Diole, Pentaerythrit, Trimethylolpropan, Ethylendiamin, Propylendiamin, Hexamethylendiamin und 1,2-Dimercaptoethan in Frage. Auch gemischt funktionelle Verbindungen wie z.B. Ethanolamin oder 2-Mercaptoethanol sind geeignet. Besonders bevorzugt werden Ethylenglykol, Butandiol und Hexandiol.

Geeignete Polyisocyanate B sind alle (cyclo)aliphatischen, aromatischen oder gemischt aromatisch-aliphatischen Diisocyanate, wie sie üblicherweise in der Polyurethanchemie verwendet werden.

Beispiele für geeignete Polyisocyanate sind Trimethylendiisocyanat, Tetramethylendiisocyanat, Pentamethylendiisocyanat, Hexamethylendiisocyanat, Propylendiisocyanat, Ethylethylendiisocyanat, 2,3-Dimethylethylendiisocyanat, 1-Methyltrimethylendiisocyanat, 1,3-Cyclopentylendiisocyanat, 1,4-Cyclohexylendiisocyanat, 1,2-Cyclohexylendiisocyanat, 1,3-Phenylendiisocyanat, 1,4-Phenylendiisocyanat, 2,4-Toluylendiisocyanat (TDI), 2,6-Toluylendiisocyanat (TDI), 4,4'-Biphenylendiisocyanat, 1,5-Naphthylendiisocyanat, 1,4-Naphthylendiisocyanat, 1-Isocyanatomethyl-5-isocyanato-1,3,3-trimethylcyclohexan (IPDI), Bis-(4-isocyanato-cyclohexyl)methan, 4,4'-Diisocyanatodiphenylether, 2,3-Bis-(8-isocyanatooctyl)-4-octyl-5-hexylcyclohexen, Trimethylhexamethylendiisocyanate, Tetramethylxylylendiisocyanate (TMXDI), Isocyanurate von obigen Diisocyanaten sowie Allophanate von obigen Diisocyanaten. Gemische solcher Di- oder Polyisocyanate können ebenfalls eingesetzt werden. Besonders bevorzugt werden TDI, TMXDI und IPDI.

Geeignete Salze C von Carbon-, Sulfon- oder Phosphonsäuren, die eine Hydroxy- oder Aminogruppe tragen, leiten sich ab von beispielsweise

Hydroxycarbonsäuren wie Glykolsäure, Milchsäure, Trichlormilchsäure, Salicylsäure, 4-Hydroxyisophthalsäure, Oxyterephthalsäure, 5,6,7,8-Tetrahydro-naphthol-(2)-carbonsäure-(3), 1-Hydroxynaphthoesäure-(2), β-Oxypropionsäure und m-Oxybenzoesäure, Aminocarbonsäuren wie Anilidoessigsäure, 2-Hydroxycarbazol-carbonsäure-(3), Glycin, Sarkosin, Methionin, α-Alanin, β-Alanin, 6-Aminocapronsäure, 6-Benzoylamino-2-chlorcapronsäure, 4-Aminobuttersäure, Asparaginsäure, Glutaminsäure, Histidin, Anthranilsäure, 2-Athylaminobenzoesäure, N-(2-Carboxylphenyl)-aminoessigsäure, 2-(3'-Aminobenzolsulfonyl-amino)benzoesäure, 3-Aminobenzoesäure, 4-Aminobenzoesäure, N-Phenylaminoessigsäure, 5-Aminobenzoldicarbonsäure und 5-(4'-Aminobenzoyl-amino)-2-aminobenzoesäure,

Hydroxysulfonsäuren wie 2-Hydroxyethansulfonsäure, Phenolsulfonsäure-(2), Phenolsulfonsäure-(3), Phenolsulfonsäure-(4), Phenoldisulfonsäure-(2,4), Naphthol-(1)-sulfonsäure,Naphthol-(1)-disulfonsäure,8-Chlornaphthol-(1)-disulfonsäure, Naphthol-(1)-trisulfonsäure, Naphthol-(2)-sulfonsäure-(1), Naphthol-(2)-trisulfonsäure, 2-Hydroxynaphthoesäure-(3)-sulfonsäure-(6) und 2-Hydroxycarbazolsulfonsäure-(7),

Aminosulfonsäuren wie Amidosulfonsäure, Hydroxylaminmonosulfonsäure, Hydrazindisulfonsäure, Sulfanilsäure, N-Phenylaminomethansulfonsäure, 4,6-Dichloranilin-sulfonsäure-(2), Phenylendiamin-(1,3)-disulfonsäure-(4,6), N-Acetylnaphthylamin-(1)-sulfonsäure-(3), Naphthylamin-(1)-sulfonsäure, Naphthylamin(2)-sulfonsäure, Naphthylamindisulfonsäure, Naphthylamintrisulfonsäure, Phenylhydrazinsulfonsäure-(2,5), 2,3-Dimethyl-4-amino-azobenzoldisulfonsäure-(4,5'), 4-(4-Methoxyphenylazo)-4'-aminostilben-2,2'-disulfonsäure, Carbazoldisulfonsäure-(2,7), Taurin, Methyltaurin, Butyltaurin, 3-Aminobenzoesäure-(1)-sulfonsäure-(5), 3-Aminotoluol-N-methansulfonsäure, 6-Nitro-1,3-dimethylbenzol-4-sulfaminsäure, 2-Aminophenolsulfonsäure-(4), 2-Amino-anisol-N-methansulfonsäure, 2-Amino-diphenylaminsulfonsäure.

Besonders bevorzugt werden die Salze von Taurin und dessen Derivaten.

Zur Kettenverlängerung der Urethanpräpolymeren setzt man ein Polyamin D zu, das mit den verbliebenen Isocyanatgruppen reagiert. Geeignete Polyamine sind Ethylendiamin (EDA), Hexamethylendiamin (HMDA), 1,4-Cyclohexylendiamin, Diaminodiphenylmethan, Diethylentriamin (DETA), Triethylentetramin, Tetraethylenpentamin, Triaminobenzol, 2-Methyl-1,5-diaminopentan (Dytek-A), die isomeren Phenylendiamine sowie Hydrazin. Besonders bevorzugt werden EDA, DETA, HMDA, Dytek-A.

Der Vorteil des erfindungsgemäßen Verfahrens gegenüber dem Stand der Technik ergibt sich aus der Separierung der Schritte
a) Einführung von ionischen Gruppen in das Urethan-Präpolymere, und
b) Kettenverlängerung
durch Verwendung von monofunktionellen Salzen (d.i. Salzen mit einem gegenüber Isocyanatgruppen reaktiven Wasserstoffatom), partielle Umsetzung des Isocyanat-terminierten Präpolymeren mit dem Salz und anschließende Kettenverlängerung. Es ist erfindungsgemäß möglich, die Umsetzung des Urethan-Präpolymeren mit dem Salz in Substanz oder in einer geringen Menge Wasser vorzunehmen und die nachfolgende Kettenverlängerung ebenfalls in Wasser durchzuführen. Auf diese Weise kann auf den Einsatz von Lösemitteln generell verzichtet werden. Im Stand der Technik werden bei der Herstellung des Polyurethans bzw. bei der nachfolgenden Umsetzung mit hydroxy- oder aminofunktionellen Salzen stets Lösemittel eingesetzt. Zwar spricht die eingangs erwähnte älteste Schrift DE-C 14 95 745, auch von einer Umsetzung in der Schmelze, jedoch ist in den Beispielen stets Aceton als Lösemittel verwendet. Bei der Herstellung oder Umsetzung genügend hochmolekularer Polyurethane wird dort wegen deren hoher Molmasse die Viskosität der Mischungen nämlich über das in der Schmelze beherrschbare Maß ansteigen. Erfindungsgemäß werden dagegen Polyurethane mit hohen Molmassen erst gebildet, wenn eine ausreichende Menge Wasser zur Verdünnung der Lösung und damit zum Absenken der Lösungsviskosität vorhanden ist.

Die aus diesen Komponenten nach dem oben beschriebenen Verfahren I bis IV erhältlichen Polyurethandispersionen sind für viele Anwendungen geeignet, beispielsweise zur Herstellung von Beschichtungsmitteln für Holz, Textilien und Metalle, als Bindemittel für wasserverdünnbare Klebstoffe oder als Harze für Druckfarben.

Sie sind kombinierbar und im allgemeinen verträglich mit anderen wäßrigen Kunststoffdispersionen und -lösungen, z.B. Acryl- und/oder Methacrylpolymerisaten, Polyurethan, Polyharnstoff-, Polyester- sowie Epoxidharzen, Thermoplasten auf Basis von Polyvinylacetat, -vinylchlorid, -vinylether, -chloropren, -acrylnitril, Ethylen-Butadien-Styrol-Copolymerisaten. Sie lassen sich auch mit verdickend wirkenden Substanzen auf Basis von carboxylgruppenhaltigen Polyacrylaten bzw. Polyurethanen, Hydroxyethylcellulose, Polyvinylalkoholen sowie anorganischen Thixotropierungsmitteln, wie Bentonit, Natrium-Magnesium- und Natrium-Magnesium-Fluor-Lithium-Silikate, kombinieren.

Die erfindungsgemäßen Polyurethan-Dispersionen lassen sich auf die verschiedensten Substrate, z.B. Keramik, Holz, Glas, Beton, vorzugsweise Kunststoffe, wie Polycarbonat, Polystyrol, Polyvinylchlorid, Polyester, Poly(meth)acrylate, Acrylnitril-Butadien-Styrol-Polymerisate und dergleichen, sowie vorzugsweise Metall, wie Eisen, Kupfer, Aluminium, Stahl, Messing, Bronze, Zinn, Zink, Titan, Magnesium und dergleichen aufbringen. Sie haften auf den verschiedenen Unterlagen ohne haftvermittelnde Grundierungen bzw. Zwischenschichten.

Die erfindungsgemäßen Polyurethan-Dispersionen sind z.B. für die Herstellung von korrosionsschützenden Überzügen und/oder Zwischenbeschichtungen für die verschiedensten Anwendungsgebiete geeignet, insbesondere zur Herstellung von Metallic- und Unibasislacken in Mehrschicht-Lackaufbauten für die Gebiete der Automobil- und Kunststofflackierung und zur Erzeugung von Grundierungslacken für das Gebiet der Kunststofflackierung.

Aufgrund von kurzen Ablüftzeiten der auf den erfindungsgemäßen Polyurethan-Dispersionen basierenden Basislacke kann die pigmentierte Basislackschicht ohne Einbrennschritt (Naß-in Naß-Verfahren) mit einem Klarlack überlackiert und anschließend zusammen eingebrannt oder forciert getrocknet werden. Basislacke, hergestellt mit den erfindungsgemäßen Polyurethan-Dispersionen, liefern weitgehend unabhängig von der Einbrenn- bzw. Trocknungstemperatur Lackfilme gleicher Qualität, so daß sie sowohl als Reparaturlack von Kraftfahrzeugen als auch als Einbrennlack bei der Serienlackierung von Kraftfahrzeugen eingesetzt werden können. In beiden Fällen resultieren Lackfilme mit einer guten Haftung auch auf der Originallackierung und mit einer guten Beständigkeit gegenüber Schwitzwasser. Weiterhin wird die Brillanz der Lackschicht nach einem Schwitzwassertest nicht nennenswert verschlechtert.

Bei der Formulierung von wasserverdünnbaren Lacken mit den erfindungsgemäßen Polyurethan-Dispersionen können die in der Lackindustrie üblichen Vernetzer, wie z.B. wasserlösliche oder -emulgierbare Melamin- oder Benzoguanaminharze, Polyisocyanate oder Präpolymeren mit endständigen Isocyanatgruppen, wasserlösliche oder -dispergierbare Polyaziridine und blockierte Polyisocyanate zugesetzt werden. Die wäßrigen Beschichtungssysteme können alle bekannten und in der Lacktechnologie üblichen anorganischen oder organischen Pigmente bzw. Farbstoffe, sowie Netzmittel, Entschäumer, Verlaufsmittel, Stabilisatoren, Katalysatoren, Füllstoffe, Weichmacher und Lösemittel enthalten.

Die erfindungsgemäßen Polyurethan-Dispersionen können auch unmittelbar zum Verkleben beliebiger Substrate verwendet werden. Zur Erzielung von speziellen Klebeeigenschaften können die erfindungsgemäßen Polyurethan-Dispersionen mit anderen Kunststoffdispersionen oder -lösungen (siehe oben) abgemischt werden. Ferner können zur Verbesserung der Wärmestand- und Schälfestigkeit Vernetzer, wie z.B. Polyisocyanate oder Präpolymere mit terminalen Isocyanat gruppen, wasserlösliche oder -emulgierbare Melamin- oder Benzoguanaminharze zugesetzt werden.

Die auf den erfindungsgemäßen Polyurethan-Dispersionen basierenden Klebstoffe können die in der Klebstofftechnologie üblichen Zusatzstoffe, wie Weichmacher, Lösungsmittel, Filmbindehilfsmittel, Füllstoffe, synthetische und natürliche Harze enthalten. Sie eignen sich speziell zur Herstellung von Verklebungen von Substraten in der Kraftfahrzeugindustrie, z.B. Verklebung von Innenausbauteilen, und in der Schuhindustrie, z.B. zum Verkleben von Schuhsohle und Schuhschaft. Die Herstellung und Verarbeitung der auf den erfindungsgemäßen Polyurethan-Dispersionen basierenden Klebstoffe erfolgt nach den üblichen Methoden der Klebetechnologie, die bei wäßrigen Dispersions- und Lösungsklebstoffen angewendet werden.

### Beispiel 1:

330,6 g eines Polyesters aus Adipinsäure und Butandiol-1,4 mit einer OH-Zahl von 47,7 und 17,6 g Neopentylglykol werden bei 130 °C zusammen vorgelegt. Zu dieser Schmelze werden 30,9 g Toluylendiisocyanat und 14,5 g m-Tetramethylxylylendiisocyanat zudosiert und bis zu einem NCO-Wert von 0,0 % gerührt. Nach Abkühlen auf 70 °C wird 15,7 g Hexandiol-1,6 zugegeben und nachdem es gelöst ist noch einmal 69,8 g m-Tetramethylxylylendiisocyanat zudosiert. Bei einem NCO-Wert von 1,8 % werden 68,5 g einer 25 %igen wäßrigen Lösung von Natriumtaurinat zugegeben und in das Harz eingerührt. Nach ca. 10 min wird eine Lösung aus 2,4 g Ethylendiamin und 124 g Wasser zugegeben und unter steigender Temperatur bis 85 °C homogen eingerührt. Nach ca. 30 min wird mit 323,3 g Wasser auf den Endfeststoffgehalt (50 %) verdünnt. Man erhält eine Dispersion mit einer Viskosität von 66 mPa.s, einem pH-Wert von 7,4, einer Aminzahl <0,3 und einer Säurezahl von 0,9.

### Beispiel 2:

Zu 330,6 g eines Polyesters aus Adipinsäure und Butandiol-1,4 mit einer OH-Zahl von 47,7 wird 10,5 g Ethylenglykol gegeben. Zu dieser Lösung wird bei steigender Temperatur 60 bis 130 °C 41,2 g Toluylendiisocyanat dosiert. Sobald der NCO-Wert 0,0 % erreicht hat wird die Schmelze auf 70 °C abgekühlt und nochmals 8,2 g Ethylenglykol zugegeben. Diese Lösung wird mit 69,8 g m-Tetramethylxylylendiisocyanat weiter umgesetzt. Nach Erreichen eines NCO-Werts von 1,5 % werden 66 g einer 25 %igen wäßrigen Lösung von Natriumtaurinat zugegeben und homogen eingerührt. Nach ca. 10 min wird eine Lösung aus 1,1 g Ethylendiamin in 111,4 g Wasser bei steigender Temperatur bis 85 °C zudosiert und über 30 min homogen eingerührt. Danach wird mit 318,2 g Wasser auf den Endfeststoffgehalt (50 %) verdünnt. Man erhält eine Dispersion mit einer Viskosität von 253 mPa.s, einem pH-Wert von 7,4, einer Aminzahl <0,1 und einer Säurezahl von 0,9.

## Patentansprüche

1. Emulgatorfrei in Wasser dispergierbare Polyurethane, erhalten durch partielle Umsetzung eines Isocyanat-terminierten Urethan-Präpolymeren mit einem Salz einer Säure, die durch ein reaktives Wasserstoffatom monofunktionell gegenüber Isocyanat ist, und nachfolgende Umsetzung der verbliebenen Isocyanatgruppen mit einem Kettenverlängerungsmittel, dadurch gekennzeichnet, daß die Menge an Salz so gewählt wird, daß 20 bis 80 % der Isocyanat-Endgruppen des Präpolymeren umgesetzt werden.

2. Wäßrige Dispersion von Polyurethanen nach Anspruch 1, erhalten durch Dispergieren des mit dem Salz umgesetzten Urethan-Präpolymeren in Wasser und anschließenden Zusatz eines Kettenverlängerungsmittels, das dann mit den verbliebenen Isocyanatgruppen reagiert.

3. Wäßrige Dispersion von Polyurethanen nach Anspruch 1, erhalten durch Zusatz eines Kettenverlängerungsmittels zu dem mit dem Salz umgesetzten Urethan-Präpolymer in einer geringen Menge Wasser, anschließende Umsetzung dieses Kettenverlängerungsmittels mit den verbliebenen Isocyanatgruppen und nachfolgende Verdünnung mit einer größeren Menge Wasser.

4. Wäßrige Dispersion von Polyurethanen nach Anspruch 1, erhalten durch Zusatz eines Kettenverlängerungsmittels gemeinsam mit der gesamten Menge an Dispergierwasser zu dem mit dem Salz umgesetzten Urethan-Präpolymer und anschließende Reaktion des Kettenverlängerungsmittels mit den verbliebenen Isocyanatgruppen.

5. Wäßrige Dispersion von Polyurethanen nach Anspruch 1, erhalten durch teilweise Hydrolyse der verbliebenen Isocyanatendgruppen des mit dem Salz umgesetzten Urethan-Präpolymeren zu Aminoendgruppen und deren anschließende Umsetzung mit den noch vorhandenen Isocyanatendgruppen der nicht hydrolysierten Urethan-Präpolymere unter Kettenverlängerung.

6. Emulgatorfreie in Wasser dispergierbare Polyurethane nach Anspruch 1, dadurch gekennzeichnet, daß das Isocyanat-terminierte Urethan-Präpolymer mit Taurin in fester Form oder Lösung umgesetzt wird.

7. Bindemittel für Beschichtungsmittel und Klebstoffe, dadurch gekennzeichnet, daß sie Dispersionen nach Anspruch 1 enthalten.

## Claims

1. A polyurethane which can be dispersed in water without emulsifier and is obtained by partial reaction of an isocyanate-terminated urethane prepolymer with a salt of an acid which is monofunctional toward isocyanate by means of a reactive hydrogen atom, followed by reaction of the remaining isocyanate groups with a chain-extending agent, which comprises the quantity of salt being chosen such that from 20 to 80% of the terminal isocyanate groups of the prepolymer are reacted.

2. An aqueous polyurethane dispersion as claimed in claim 1, obtained by dispersing in water the urethane prepolymer which has been reacted with the salt, and then adding a chain-extending agent which then reacts with the remaining isocyanate groups.

3. An aqueous polyurethane dispersion as claimed in claim 1, obtained by adding a chain-extending agent to the urethane prepolymer which has been reacted with the salt, in a small quantity of water, and then reacting this chain-extending agent with the remaining isocyanate groups, followed by dilution with a larger quantity of water.

4. An aqueous polyurethane dispersion as claimed in claim 1, obtained by adding a chain-extending agent together with the total quantity of dispersion water to the urethane prepolymer which has been reacted with the salt, and then reacting the chain-extending agent with the remaining isocyanate groups.

5. An aqueous polyurethane dispersion as claimed in claim 1, obtained by partial hydrolysis of the remaining terminal isocyanate groups of the urethane prepolymer which has been reacted with the salt, to give terminal amino groups, which are then reacted with the remaining terminal isocyanate groups of the nonhydrolyzed urethane prepolymers, with chain extension taking place.

6. A polyurethane which can be dispersed in water without emulsifier, as claimed in claim 1, wherein the isocyanate-terminated urethane prepolymer is reacted with taurine in solid form or as a solution.

7. A binder for coating compositions and adhesives, which contains a dispersion as claimed in claim 1.

## Revendications

1. Polyuréthannes dispersables dans l'eau sans émulsionnant obtenus par réaction partielle d'un prépolymère d'uréthanne à groupes terminaux isocyanato avec un sel d'un acide, lequel sel est monofonctionnel vis-à-vis de l'isocyanate par l'intermédiaire d'un atome d'hydrogène réactif et par réaction ultérieure des groupes isocyanato restants avec un agent d'allongement de chaîne, caractérisé en ce qu'on choisit la quantité de sel de façon telle que 20 à 80 % des groupes terminaux isocyanato du prépolymère aient réagi.

2. Dispersion aqueuse de polyuréthannes selon la revendication 1, obtenue par dispersion du prépolymère d'uréthanne que l'on a fait réagir dans l'eau avec le sel et ensuite par ajout d'un agent d'allongement de chaîne, qui réagit avec les groupes isocyanato restants.

3. Dispersion aqueuse de polyuréthannes selon la revendication 1, obtenue par ajout d'un agent d'allongement de chaîne au prépolymère d'uréthanne que l'on a fait réagir avec le sel dans une faible quantité d'eau, par réaction ultérieure de cet agent d'allongement de chaîne avec les groupes isocyanato restants et par dilution ultérieure avec une plus grande quantité d'eau.

4. Dispersion aqueuse de polyuréthannes selon la revendication 1, obtenue par ajout d'un agent d'allongement de chaîne, conjointement avec la quantité totale d'eau de dispersion, au prépolymère d'uréthanne que l'on a fait réagir avec le sel et par réaction ultérieure de l'agent d'allongement de chaîne avec les groupes isocyanato restants.

5. Dispersion aqueuse de polyuréthannes selon la revendication 1, obtenue par hydrolyse partielle des groupes isocyanato restants avec le prépolymère d'uréthanne que l'on a fait réagir avec le sel pour obtenir des groupes amino terminaux et leur réaction ultérieure avec les groupes isocyanato restants des prépolymères d'uréthannes n'ayant pas été hydrolysés, sous allongement de chaîne.

6. Polyuréthannes dispersables dans l'eau sans émulsionnant selon la revendication 1, caractérisés en ce que l'on fait réagir le prépolymère d'uréthanne à groupe isocyanato terminaux avec la taurine sous forme solide ou en solution.

7. Liants pour des agents de revêtement et adhésifs, caractérisés en ce qu'il contiennent des dispersions selon la revendication 1.
